# EUROPEAN PATENT APPLICATION

(11) **EP 4 548 733 A1**
(43) Date of publication of application: **07.05.2025**
(21) Application number: 23207778.4
(22) Date of filing: 03.11.2023
(51) Int. Cl.: A01B 39/18, A01B 69/04

(54) **A WEEDING TOOL**

(71) Applicant: Husqvarna AB, 561 82 Huskvarna (SE)
(72) Inventor: Kistler, Michael, 89185 Hüttisheim (DE); Merkle, Martin, 89168 Niederstotzingen (DE)
(74) Representative: Finkele, Rolf

(57) **Abstract**

A weeding tool **(100)** for picking up weeds from a plantation surface **(G)** includes a control unit to control the working of the weeding tool **(100).** Further, a navigation device is communicably coupled with the control unit to navigate the weeding tool **(100)** on the plantation surface **(G)** to detect weeds on the plantation surface **(G).** Further, an actuating device **(300, 310)** is communicably coupled with the control unit such that the actuating device **(300, 310)** is an electric device configured to actuate a movement in the weed removal device **(400)** towards and away from the plantation surface **(G)** respectively. The weeding tool **(100)** is characterized in that the control unit includes a sensing unit configured to sense a touch of the weed removal device **(400)** with the plantation surface **(G)** on which the weed is grown. The weeding tool **(100)** commences picking up of weed from the plantation surface **(G)** after the sensing unit senses the touch of the weed removal device **(400)** with the plantation surface **(G).**

## Description

### TECHNICAL FIELD

The present disclosure relates to a weeding tool for picking up weeds from a plantation surface.

### BACKGROUND

Devices for removing weeds are now common products in private gardening and vegetable growing. Robots that remove unwanted weeds are only known to a few. Large machine robots intended for agriculture have been developed at universities. Such robots either push the weeds deeper into the ground or have small plowshares installed therein, which bring the weeds to the surface by loosening them and then dry them up. A field robot is also known to burn the weeds with a laser beam. All field robots follow a strict lane and are not agile. Another well-known such product used as a little helper in the vegetable garden, for example, removes the upper part of the weeds with a rapidly rotating thread similar to a lawn trimmer. This product drives individually through the bed and removes everything that stands in the way. However, the plants themselves must be protected by means of an additional mowing protection to be attached. This is time-consuming and the mowing protection does not adapt to the variety of sizes of constantly growing plants.

An example is provided by Chinese utility model CN 217,256,336 U (hereinafter referred to as '336 reference). The '336 reference provides a weeding robot having a frame and a traveling mechanism arranged at the bottom of the frame. A solar power supply device is arranged at the top of the frame. A leveling mechanism is arranged at the upper part of the frame. An execution mechanism is arranged on the leveling mechanism, and an end effector is arranged at the tail end of the execution mechanism. The '336 reference provides a weeding robot having improved stability when facing complicated field terrain, realizes the accurate position of the weeds and automatically gets rid of the weeds in the crops.

Another example is provided by United States patent application US 2023/0043631 A1 (hereinafter referred to as '631 reference). The '631 reference provides an apparatus for efficient targeting or removal of weeds or other plants. The apparatus may include a vehicle having a frame, a motor and a plurality of ground engaging members adapted to propel the vehicle over a surface. It may also include a robotic arm comprising a distal portion and a proximal portion coupled to the frame, and an implement, such as a tool or hoe connected to the distal portion of the robotic arm. The implement can be raised and lowered, and also moved relative to the surface by the robotic arm by pivoting or rotating the robotic arm at or near the proximal portion.

### SUMMARY OF THE INVENTION

In view of the above, it is an objective of the present invention to solve or at least reduce the drawbacks discussed above. The objective is at least partially achieved by a weeding tool for picking up weeds from a plantation surface.

According to an aspect of the present invention, a weeding tool for picking up weed from a plantation surface is provided. The weeding tool includes a control unit to control a working of the weeding tool. The weeding tool includes a navigation device communicably coupled with the control unit. The navigation device is configured to navigate the weeding tool on the plantation surface to detect weeds on the plantation surface. The weeding tool further includes an actuating device communicably coupled with the control unit. The actuating device is an electric device configured to actuate a movement in a weed removal device towards and away from the plantation surface. The weed removal device is a clamp comprising at least two arms movable towards and away from each other to close and open the clamp respectively. The weeding tool is characterized in that the control unit includes a sensing unit configured to sense a touch of the weed removal device with the plantation surface on which the weed is grown. The weeding tool commences picking up of weed from the plantation surface after the sensing unit senses the touch of the weed removal device with the plantation surface on which the weed is grown.

Thus, the present disclosure provides an improved weeding tool that may provide a solution for completely automatic removal of weeds from a target area without any requirement of a manual intervention. The target area may be a garden area, a lawn, vegetable beds, ornamental beds, or any other similar application area. Weed removal is a tedious process for a user which consumes time, energy, and effort. The weeding tool may provide the user with a solution to automatedly remove weeds from a target area and may take care of this tedious process of weed removal without much additional input being required on each step. The weeding tool may autonomously identify the weed, navigate up to the weed, and destroy the weed therefrom. Thus, the weeding tool may improve the overall productivity of the user working in a particular target area. Various usage areas may be envisioned for the weeding tool as per requirements.

According to an exemplary embodiment of the invention, the weeding tool is a walking robot with a front set of legs and a rear set of legs and configured to walk on the plantation surface. The front set of legs and the rear set of legs are configured to exhibit walking, lowering, and raising of the walking robot. The lowering and raising of the walking robot translates to the lowering and raising of the weed removal device towards and away from the plantation surface. The actuation device is configured to operate the front set of legs and the rear set of legs.

The walking robot having a set of front legs and rear legs may allow for minimizing footprints of the weeding tool over the plantation surface. This may advantageously cause minimal intervention and therefore minimal damage to healthy plantation. The walking robot may walk up to the identified weed and lower and raise the weed removal device to remove the weed therefrom. Such movement may make it easier for the weeding tool to navigate around the plantation surface without causing any harm to the healthy plantation. In an possible embodiment the walking robot may have rollers/wheels at the end of the feet, thus to allow a rolling movement of the robot, in particular in a situation where the robot might change its orientation as far as the ground surface on which the robot walks allows for a rolling movement (such as turning around).

According to an exemplary embodiment of the invention, the sensing unit senses the touch of the weed removal device with the plantation surface by analyzing a data of a level sensor of the walking robot when the weed removal device is lowered towards the plantation surface. The level sensor is communicably coupled with the control unit. Analysis of the data obtained from the level sensor may provide accurate estimation of inclination of the actuating device. Therefore, the control unit may accordingly sense the touch of the weed removal device with the plantation surface.

According to an exemplary embodiment of the invention, the level sensor senses a differential angle of inclination of the walking robot. Based upon the inclination angle sensed, the control unit may accordingly control the actuating device to destroy the weed.

According to an exemplary embodiment of the invention, the weeding tool is a wheeled robot configured to maneuver on the plantation surface. The weed removal device is operatively coupled with the wheeled robot. The weed removal device is movable towards and away from the plantation surface when actuated by the actuating device. The wheeled robot may provide easy maneuvering of the weeding tool on the plantation surface.

According to an exemplary embodiment of the invention, the sensing unit senses the touch of the weed removal device with the plantation surface by detecting an increase in electrical current drawn by the actuating device when the weed removal device is lowered towards the plantation surface. Electrical current drawn by the actuating device may change with lowering and raising of the weed removal device with respect to the plantation surface. The sensing unit may detect the variation in the electric current and accordingly sense the touch of the weed removal device with the plantation surface.

According to an exemplary embodiment of the invention, the actuation device is an electric motor. Electric motor may help to operate the weed removal device towards and away from the plantation surface.

According to an exemplary embodiment of the invention, the weeding tool is communicably coupled with a video sensor and an image processing unit. The video sensor and the image processing unit in combination may help the control unit to sense the touch of the weed removal device with the plantation surface.

According to an exemplary embodiment of the invention, the sensing unit senses the touch of the weed removal device with the plantation surface by analyzing a data from the video sensor and the image processing unit. The video sensor and the image processing unit are communicably coupled with the control unit. The video sensor may detect video signals of the plantation surface, and the image processing unit may process the video signals to determine the touch of the weed removal device with the plantation surface.

According to an exemplary embodiment of the invention, the control unit is operatively coupled to the weed removal device such that the control unit operates to move at least two arms away from each other, resulting in an angle between each other of 5° to 180° before the actuating device actuates the movement in the weed removal device towards the plantation surface. The control unit may move the arms away so that the clamp is open to catch the weed.

According to an exemplary embodiment of the invention, the control unit operates to move at least two arms of the weed removal device towards each other to close the clamp before the actuating device actuates the movement in the weed removal device away from the plantation surface. Closing the clamp may allow the weed removal device to catch and uproot the weed from the plantation surface.

According to a further aspect of the present invention, a method of operating a weeding tool for picking up weeds from a plantation surface is provided. The method includes controlling the operation of the weeding tool using a control unit. The method includes navigating the weeding tool on the plantation surface to detect weeds on the plantation surface using a navigation device communicably coupled with the control unit. The method includes actuating a movement in a weed removal device towards and away from the plantation surface using an actuating device communicably coupled with the control unit. The weed removal device is a clamp comprising at least two arms movable towards and away from each other to close and open the clamp, respectively. The method is characterized in that sensing a touch of the weed removal device with the plantation surface on which the weed is grown is achieved by using a sensing unit of the control unit. The weeding tool commences picking up of weed from the plantation surface after the sensing unit senses the touch of the weed removal device with the plantation surface on which the weed is grown.

The method of operating the weeding tool may provide a solution for completely automatic removal of weeds from a target area without any requirement of a manual intervention. The target area may be a garden area, a lawn, vegetable beds, ornamental beds, or any other similar application area. Weed removal is a tedious process for a user which consumes time, energy, and effort. The method of operating the weeding tool may provide the user with a solution to automatedly remove weeds from a target area and takes care of this tedious process of weed removal without much additional input being required on each step. The weeding tool may autonomously identify the weed, navigate up to the weed, and destroy the weed therefrom. Thus, the method may improve the overall productivity of the user working in a particular target area. Various usage areas may be envisioned for the weeding tool as per requirements.

According to an exemplary embodiment of the invention, the method to operate the weeding tool includes that the sensing unit senses the touch of the weed removal device with the plantation surface by analyzing a data of a level sensor of the weeding tool when the weed removal device is lowered towards the plantation surface. The level sensor is communicably coupled with the control unit. Analysis of the data obtained from the level sensor may provide accurate estimation of inclination of the actuating device. Therefore, the control unit may accordingly sense the touch of the weed removal device with the plantation surface.

According to an exemplary embodiment of the invention, the method to operate the weeding tool includes that the sensing unit senses the touch of the weed removal device with the plantation surface by detecting an increase in electrical current drawn by the actuating device when the weed removal device is lowered towards the plantation surface. Electrical current drawn by the actuating device may change with lowering and raising of the weed removal device with respect to the plantation surface. The sensing unit may detect the variation in the electric current and accordingly sense the touch of the weed removal device with the plantation surface.

According to an exemplary embodiment of the invention, the method to operate the weeding tool includes that the sensing unit senses the touch of the weed removal device with the plantation surface by analyzing a data from a video sensor and an image processing unit. The video sensor and the image processing unit are communicably coupled with the control unit. The video sensor may detect video signals of the plantation surface, and the image processing unit may process the video signals to determine the touch of the weed removal device with the plantation surface.

Before discussing the invention with the help of the drawings the invention will be briefly discussed in general. A walking robot, for example, with 4 -6 legs, similar to an ant in terms of sense of movement may be provided such that the walking robot may move at different speeds. The walking robot may lower its frame by bending the legs of the walking robot. The walking robot may be equipped with two arms. The weed detection may be done via camera detection comparison in the software. The walking robot may detect a boundary of a plantation surface. The floor level of the plantation surface may be scanned with the two arms slightly open. With this method, there may be a greater chance of easily grabbing the root of the weed in the plantation surface, and thus closer to the root. The walking robot may use two arms to scan the floor level of the plantation surface in several ways. One of the ways may be by lowering the two arms.

The lowering of the two arms may be done by linear movement in a vertical direction. Feedback may be received by increasing the torque of an actuator of the linear motion. The walking robot may detect the weed (hereinafter referred to as a plant). The walking robot may position itself horizontally above the plant. The walking robot may position itself vertically above the plant. The two arms may set an opening angle greater than 5° and less than 180°. The two arms may move vertically down to the plantation surface. The motor torque of the two arms vertical adjustment may increase, and the software may process the data. The two arms may close and hold the plant in place. The two arms may move vertically and pull the plant out of the plantation surface. The two arms may open, and the plant may remain on the plantation surface.

Another way may be by lowering the frame. The frame may be lowered by identical movement of all legs. Feedback may be received by position sensor of the overall control. The walking robot may detect the weed (hereinafter referred to as the plant). The walking robot may position itself horizontally above the plant. The walking robot may position itself vertically above the plant. The two arms may set an opening angle greater than 5° and less than 180°. The two arms may move vertically down to the plantation surface. The two arms may stand up and the walking robot may continue to move vertically. This may result in a differential angle of inclination, detected by means of a position sensor. The two arms may close and hold the plant in place. The walking robot may move vertically and may pull the plant out of the plantation surface. The two arms may open, and the plant may remain on the plantation surface.

The walking robot according to the present invention may provide fully automatic removal of weeds in the plantation surface. Possible uses may be such as, but not limited to, in vegetable beds, in ornamental beds, in lawns etc.

According to an exemplary embodiment of the invention, the walking robot may provide one or more means for detection of weeds, logical possibilities for detecting a floor height, and mechanics for removing the weed.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a weeding tool in accordance with an exemplary embodiment of the present disclosure;
**FIG. 2** illustrates a perspective view of a weed removal device with two arms of the weed removal device at an angle relative to each other in accordance with an exemplary embodiment of the present disclosure;
**FIG. 3** illustrates a perspective view of a weed removal device touching a plantation surface in accordance with an exemplary embodiment of the present disclosure;
**FIG. 4** illustrates a perspective view of a weed removal device with two arms of the weed removal device engaging each other in accordance with an exemplary embodiment of the present disclosure;
**FIG. 5** illustrates a perspective view of a weed removal device with two arms of the weed removal device uprooting a weed in accordance with an exemplary embodiment of the present disclosure;
**FIG. 6** illustrates another perspective view of a weed removal device with two arms of the weed removal device at an angle relative to each other in accordance with an exemplary embodiment of the present disclosure;
**FIG. 7** illustrates a perspective view of a wheeled robot in accordance with an exemplary embodiment of the present disclosure;
**FIG. 8** illustrates a perspective view of a wheeled robot having a video sensor and image processing unit in accordance with an exemplary embodiment of the present disclosure; and
**FIG. 9** illustrates a flowchart of a method of operating a weeding tool for picking up weeds from a plantation surface in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

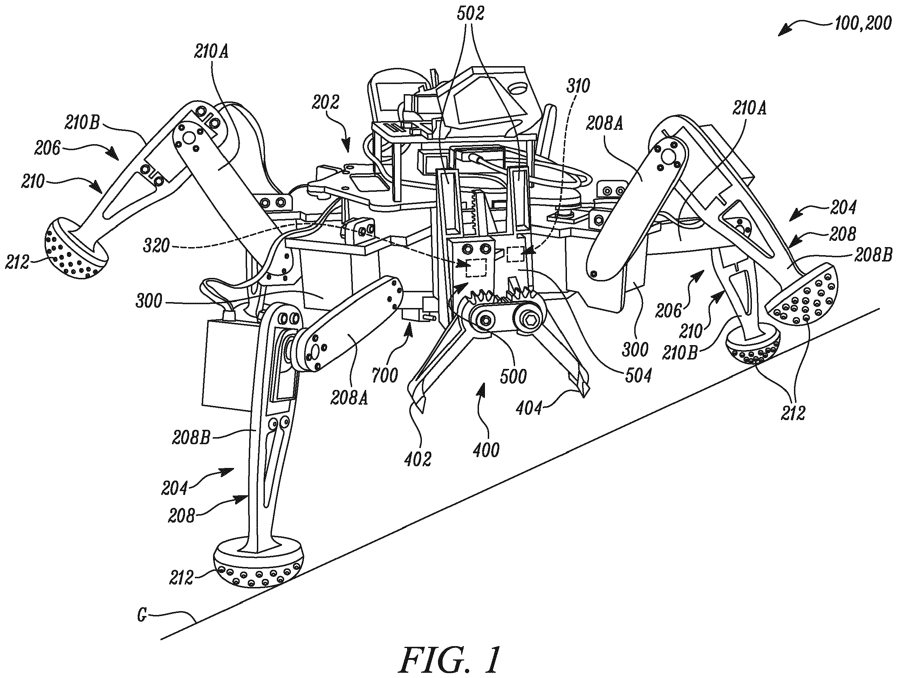

**FIG. 1** illustrates a perspective view of a weeding tool **100.** The weeding tool **100** is configured to maneuver or navigate on a plantation surface "**G**" on which the weed is grown. The weeding tool **100** is further configured to pick up weed from the plantation surface "**G**". The weeding tool **100** as illustrated in **FIG. 1** is a walking robot **200** configured to walk on the plantation surface "**G**". The walking robot **200** includes a frame **202.** The frame **202** houses electronics to control the operation of the walking robot **200.** The frame **202** houses a control unit to control the working of the weeding tool **100** or the walking robot **200.** The frame **202** additionally includes a video sensor and an image processing unit **700** coupled to the bottom side of the frame **202** of the walking robot **200.** The video sensor and the image processing unit **700** are communicably coupled with the control unit. Further, a navigation device is communicably coupled with the control unit such that the navigation device is configured to navigate the weeding tool **100** or the walking robot **200** on the plantation surface "**G**" to detect weeds on the plantation surface "**G**". The navigation device is separate from the video sensor and the image processing unit **700.**

The walking robot **200** further includes a front set of legs **204** and a rear set of legs **206** such that the front set of legs **204** and the rear set of legs **206** are configured to exhibit walking, lowering, and raising of the walking robot **200.** The front set of legs **204** includes two legs **208** disposed at the front of the walking robot **200** and the rear set of legs **206** includes two legs **210** disposed at the rear of the walking robot **200.** Further, each of the two legs **208** of the front set of legs **204** includes an upper leg portion **208A** and a lower leg portion **208B** such that the upper leg portion **208A** and the lower leg portion **208B** are mechanically coupled to each other and movable relative to each other. The upper leg portion **208A** of each of the two legs **208** of the front set of legs **204** is mechanically coupled to the frame **202** while the lower leg portion **208B** of each of the two legs **208** of the front set of legs **204** is configured to engage and disengage with the plantation surface "**G**".

Similarly, each of the two legs **210** of the rear set of legs **206** includes an upper leg portion **210A** and a lower leg portion **210B** such that the upper leg portion **210A** and the lower leg portion **210B** are mechanically coupled to each other and movable relative to each other. The upper leg portion **210A** of each of the two legs **210** of the rear set of legs **206** is mechanically coupled to the frame **202** while the lower leg portion **210B** of each of the two legs **210** of the rear set of legs **206** is configured to engage and disengage with the plantation surface "**G**". Further, the lower leg portions **208B** and **210B** of the front set of legs **204** and the rear set of legs **206** respectively are each provided with a foot **212** for soft landing on the plantation surface "**G**".

Further, during movement or walking phase of the walking robot **200**, at any moment a pair of diagonally opposite legs **208, 210** from the front set of legs **204** and the rear set of legs **206** are engaged with or grounded on the plantation surface "**G**" while other pair of diagonally opposite legs **208, 210** from the front set of legs **204** and the rear set of legs **206** are disengaged from the plantation surface "**G**" or are in the air.

Further, the movement of the front set of legs **204** and the rear set of legs **206** is controlled by an actuating device **300**, preferably four actuating devices **300**, as illustrated in **FIG. 1****.** In other words, the actuating device **300**, preferably four actuating devices **300** are configured to operate the front set of legs **204** and the rear set of legs **206.** The four actuating devices **300** are each assigned to the two legs **208** of the front set of legs **204** and the two legs **210** of the rear set of legs **206.** The four actuating devices **300** are electric devices respectively and are each communicably coupled to the control unit housed in the frame **202** of the walking robot **200** such that the control unit based on the feedback from the navigation device operates the four actuating devices **300** such that the walking robot **200** maneuvers on the plantation surface "**G**" and reaches a location on the plantation surface "**G**" where the weed is grown.

Further, when the walking robot **200** reaches the location on the plantation surface "**G**" where the weed is grown, the two legs **208** of the front set of legs **204** as well as the two legs **210** of the rear set of legs **206** are all soft-landed on the plantation surface "**G**" such that the control unit communicably coupled with the respective actuating devices **300** of the two legs **208** of the front set of legs **204** as well as the two legs **210** of the rear set of legs **206** instructs the actuating devices **300** such that the two legs **210**, particularly the two upper leg portions **208A** and the two legs **210**, particularly the two upper leg portions **210A** starts to lower towards the plantation surface "**G**".

With continuous reference to **FIG. 1**, the frame **202** of the walking robot **200** is mechanically coupled to a weed removal device **400** such that the lowering and raising of the walking robot **200** translates to the lowering and raising of the weed removal device **400** towards and away from the plantation surface "**G**". The weed removal device **400** is a clamp that includes at least two arms **402**, **404** that are movable towards and away from each other to close and open the clamp respectively. The weed removal device **400** is mechanically coupled to the frame **202** of the walking robot **200** via a slide and transmission frame **500** which is directly coupled to the frame **202** of the walking robot **200.**

The slide and transmission frame **500** includes two elongate parts **502** slidably linked onto the frame **202** such that the two elongate parts **502** optionally allows reciprocating movement of the weed removal device **400** in a vertical direction perpendicular to the plantation surface "**G**". Further, the two elongate parts **502** at least partially house a transmission box **504** that further mechanically couples to the weed removal device **400.**

The transmission box **504** houses an actuating device **310** and a secondary actuating device **320** such that the actuating device **310** is communicably coupled to the control unit and the secondary actuating device **320** is operatively coupled to the control unit. In other words, the control unit controls the secondary actuating device **320** to move the at least two arms **402**, **404** of the weed removal device **400** towards and away from each other to close and open the clamp respectively. Further, the actuating device **310** optionally allows reciprocating movement of the weed removal device **400** towards and away from the plantation surface "**G**" by actuating the two elongate parts **502** that are slidably linked onto the frame **202.** Further, the actuating device **310** and the secondary actuating device **320** are electric devices, particularly the electric motors respectively.

With continuous reference to **FIG. 1**, when the frame **202** lowers towards the plantation surface "**G**", due to the lowering of the two upper leg portions **208A** and the two upper leg portions **210A**, the at least two arms **402**, **404** of the weed removal device **400** also lowers such that when the at least two arms **402**, **404** of the weed removal device **400** touches the plantation surface "**G**", the two upper leg portions **208A** of the front set of legs **204** that are proximate to the at least two arms **402**, **404** stops lowering further while the two upper leg portions **210A** that are relatively distant to the at least two arms **402**, **404** of the weed removal device **400** continue to lower further within the feasible limits of lowering. Consequently, the walking robot **200** exhibits a substantially tilting orientation with a front of the walking robot **200** being at some inclination to a rear of the walking robot **200.** This differential angle of inclination of the walking robot **200** is sensed by a level sensor communicably coupled with the control unit of the walking robot **200.** The control unit includes a sensing unit such that the sensing unit is configured to sense the touch of the weed removal device **400** or the at least two arms **402**, **404** of the weed removal device **400** with the plantation surface "**G**" by analyzing a data of the level sensor of the walking robot **200** when the weed removal device **400** is lowered towards the plantation surface "**G**".

Optionally or additionally, and in particular if the lowering of the frame **202** towards the plantation surface "**G**" is not desirous, then when the walking robot **200** reaches the location on the plantation surface "**G**" where the weed is grown, the control unit selectively instructs the actuating device **310** (instead of the four actuating devices **300**) housed in the transmission box **504** to actuate the movement in the weed removal device **400** towards and away from the plantation surface "**G**" by sliding the two elongate parts **502** relative to the frame **202** in the direction towards and away from the plantation surface "**G**". Further, the sensing unit senses the touch of the weed removal device **400** or the at least two arms **402**, **404** of the weed removal device **400** with the plantation surface "**G**" on which the weed is grown by detecting an increase in electrical current drawn by the actuating device **310** when the weed removal device **400** is lowered towards the plantation surface "**G**".

Further optionally or additionally, the sensing unit (or in addition to detecting the increase in electrical current drawn by the actuating device **310**) senses the touch of the weed removal device **400** or the at least two arms **402**, **404** of the weed removal device **400** with the plantation surface "**G**" on which the weed is grown using the video sensor and the image processing unit **700** coupled to the bottom side of the frame **202** of the walking robot **200.** In other words, when the weed removal tool **400** or the at least two arms **402**, **404** of the weed removal device **400** lowers towards the plantation surface "**G**" on which the weed is grown and touch the plantation surface "**G**", the sensing unit of the control unit senses the touch of the weed removal device **400** with the plantation surface "**G**" by analyzing the data from the video sensor and the image processing unit **700.**

Also the walking robot depicted with **Fig. 1** shows and the according description elaborates on three different sensing units configured to sense a touch of the weed removal device **(400)** with the plantation surface **(G)** on which the weed is grown, it is obvious that just one or two of these sensing units are realized and embodied with the robot at one time. So for example the might not be any image processing unit **700** or the robot might just relay on the actuation device **310** being a motor of which the current drawn is analyzed.

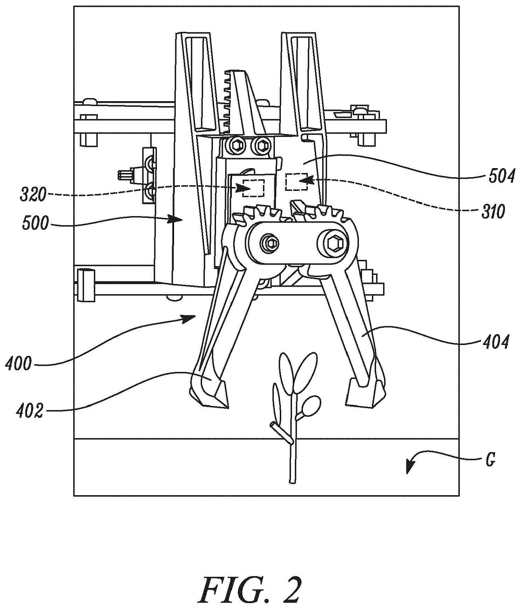

**FIG. 2** illustrates a perspective view of the slide and transmission frame **500** and the weed removal device **400.** The control unit of the walking robot **200** is operatively coupled to the weed removal device **400** via the secondary actuating device **320** housed in the transmission box **504** such that the control unit operates to move the at least two arms **402**, **404** away from each other, resulting in an angle between each other of **5**° to **180°** before selectively instructing either the actuating device **300**, preferably the four actuating devices **300** to actuate the lowering movement in the frame **202** of the walking robot **200** and hence the weed removal device **400** towards the plantation surface "**G**", or instructing the actuating device **310** housed in the transmission box **504** to actuate the movement in the weed removal device **400** towards and away from the plantation surface "**G**" by sliding the two elongate parts **502** relative to the frame **202** in the direction towards and away from the plantation surface "**G**".

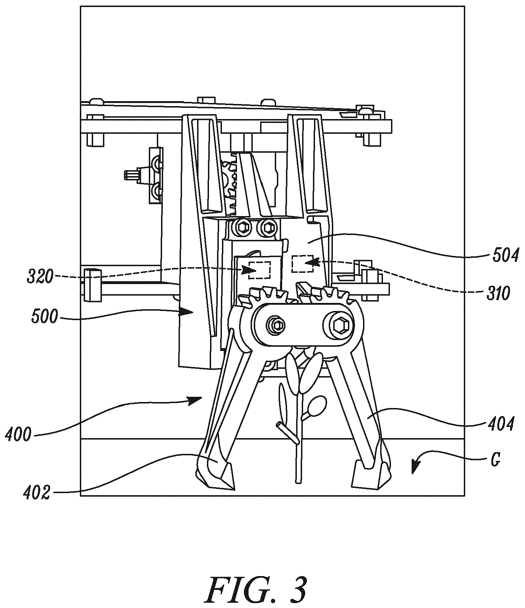

**FIG. 3** illustrates another perspective view of the slide and transmission frame **500** and the weed removal device **400** with the at least two arms **402**, **404** having the angle between each other of **5°** to **180°**. The control unit based on the feedback from the navigation device confirms the positioning of the walking robot **200** on the location where the weed is grown. Upon confirmation, the control unit communicably coupled with the actuating devices **300, 310** either instructs the actuating devices **300**, preferably the four actuating devices **300** or instructs the actuating device **310** to lower the weed removal device **400** such that the weed removal device **400** or the at least two arms **402**, **404** of the weed removal device **400** touches the plantation surface "**G**".

When the control unit instructs the actuating device **300**, preferably the four actuating devices **300** to lower the weed removal device **400** towards the plantation surface "**G**", the four actuating devices **300** operate such that the two legs **210**, particularly the two upper leg portions **208A** and the two legs **210**, particularly the two upper leg portions **210A** starts to lower towards the plantation surface "**G**" such that when the at least two arms **402**, **404** of the weed removal device **400** touches the plantation surface "**G**" and surround the weed to be picked or grabbed, the two upper leg portions **208A** of the front set of legs **204** that are proximate to the at least two arms **402**, **404** stops lowering further while the two upper leg portions **210A** that are relatively distant to the at least two arms **402**, **404** of the weed removal device **400** continue to lower further within the feasible limits of lowering.

Consequently, the walking robot **200** exhibits the substantially tilting orientation with the front of the walking robot **200** being at some inclination to the rear of the walking robot **200.** This differential angle of inclination of the walking robot **200** is sensed by the level sensor communicably coupled with the control unit of the walking robot **200.** Further, the control unit includes the sensing unit such that the sensing unit is configured to sense the touch of the weed removal device **400** or the at least two arms **402, 404** of the weed removal device **400** with the plantation surface "**G**" by analyzing the data of the level sensor of the walking robot **200** when the weed removal device **400** is lowered towards the plantation surface "**G**" on which the weed is grown.

Further, when the control unit instructs the actuating device **310** to lower the weed removal device **400** towards the plantation surface "**G**", the actuating device **310** operates to slide the two elongate parts **502** relative to the frame **202** in the direction towards the plantation surface "**G**". Further, the sensing unit senses the touch of the weed removal device **400** or the at least two arms **402, 404** of the weed removal device **400** with the plantation surface "**G**" on which the weed is grown by detecting the increase in electrical current drawn by the actuating device **310** when the weed removal device **400** is lowered towards the plantation surface "**G**".

Further, the sensing unit optionally (or in addition to detecting the increase in electrical current drawn by the actuating device **310**) also senses the touch of the weed removal device **400** or the at least two arms **402, 404** of the weed removal device **400** with the plantation surface "**G**" on which the weed is grown using the video sensor and the image processing unit **700** coupled to the bottom side of the frame **202** of the walking robot **200.**

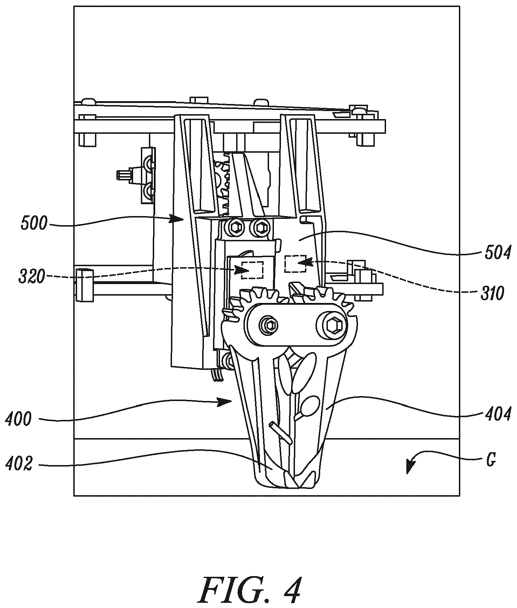

**FIG. 4** illustrates another perspective view of the slide and transmission frame **500** and the weed removal device **400** with the at least two arms **402, 404** having the angle between each other of **0**°. The weeding tool **100** or the walking robot **200** commences picking up of weed from the plantation surface "**G**" after the sensing unit senses the touch of the weed removal device **400** with the plantation surface "**G**" on which the weed is grown. In other words, sensing the touch of the weed removal device **400** with the plantation surface "**G**" on which the weed is grown is a prerequisite for commencing picking up of weed from the plantation surface "**G**" by the weeding tool **100** or the walking robot **200.**

The control unit of the walking robot **200** is operatively coupled to the weed removal device **400** via the secondary actuating device **320** housed in the transmission box **504** such that the control unit operates to move the at least two arms **402**, **404** of the weed removal device **400** towards each other to close the clamp and grab the weed to be picked before the control unit selectively instructs either the actuating device **300**, preferably the four actuating devices **300**, or the actuating device **310** to actuate the movement in the frame **202** by raising the two upper leg portions **208A** and the two upper leg portions **210A** and hence actuate the weed removal device **400** away from the plantation surface "**G**", or to actuate the movement in the weed removal device **400** away from the plantation surface "**G**" by sliding the two elongate parts **502** relative to the frame **202** in the direction away from the plantation surface "**G**" respectively.

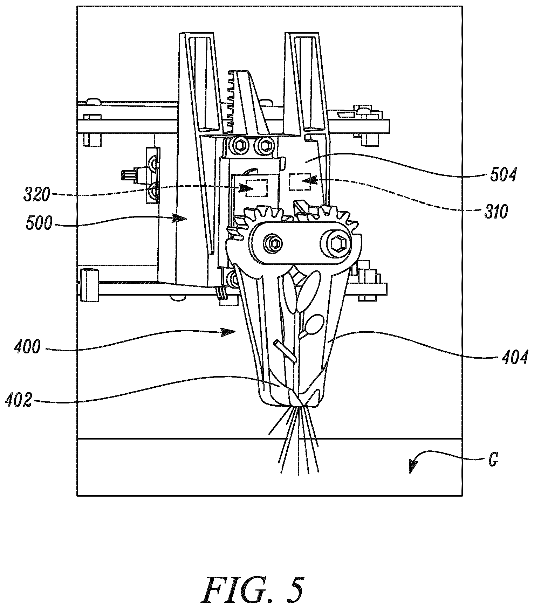

**FIG. 5** illustrates another perspective view of the slide and transmission frame **500** and the weed removal device **400** such that the control unit of the walking robot **200** either instructs the actuating device **300**, preferably the four actuating devices **300** to actuate the movement in the frame **202** by raising the two upper leg portions **208A** and the two upper leg portions **210A** and hence actuate the weed removal device **400** away from the plantation surface "**G**" while still keeping the at least two arms **402**, **404** of the weed removal device **400** towards each other at **0°** angle to keep the weed in a grabbed and uprooted state, or the control unit of the walking robot **200** instructs the actuating device **310** to actuate the movement in the weed removal device **400** away from the plantation surface "**G**" by sliding the two elongate parts **502** relative to the frame **202** in the direction away from the plantation surface "**G**" while still keeping the at least two arms **402**, **404** of the weed removal device **400** towards each other at **0°** angle to keep the weed in a grabbed and uprooted state.

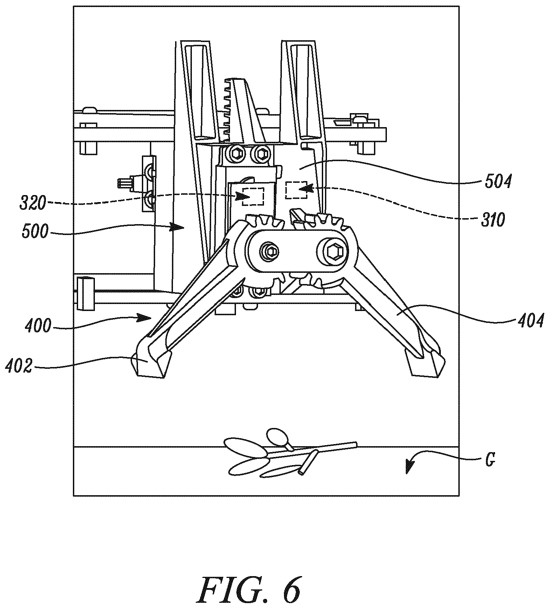

**FIG. 6** illustrates yet another perspective view of the slide and transmission frame **500** and the weed removal device **400** such that the control unit of the walking robot **200** is operatively coupled to the weed removal device **400** via the secondary actuating device **320** housed in the transmission box **504** such that the control unit operates to move the at least two arms **402**, **404** away from each other, resulting in an angle between each other of **5°** to **180**° after the weed removal device **400** is actuated away from the plantation surface "**G**". When the at least two arms **402**, **404** have the angle between each other of **5**° to **180**°, the grabbed and uprooted weed is released for collection.

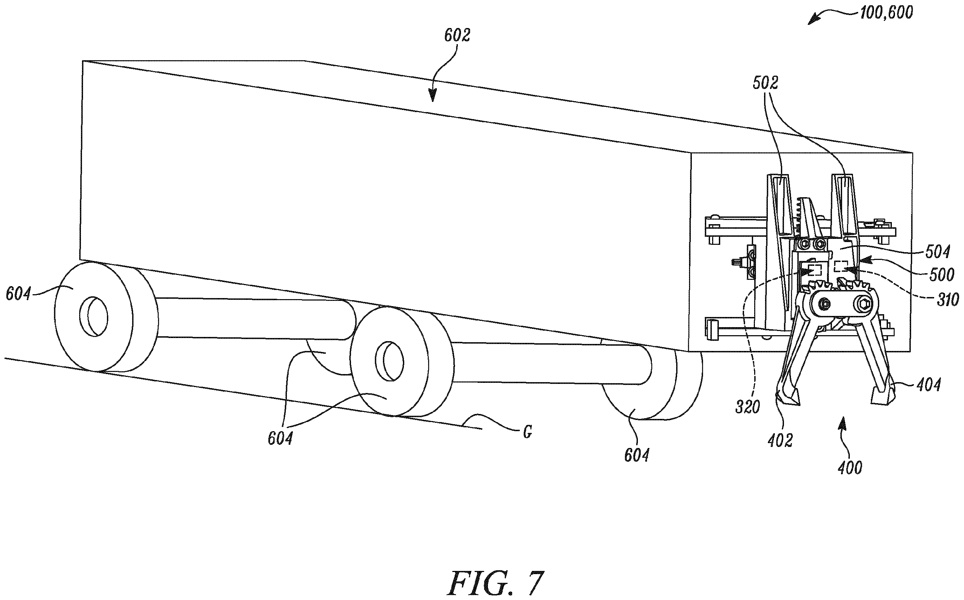

**FIG. 7** illustrates a perspective view of a weeding tool **100** according to another exemplary embodiment of the present invention. The weeding tool **100** is configured to maneuver or navigate on a plantation surface "**G**" on which the weed is grown. The weeding tool **100** is further configured to pick up weed from the plantation surface "**G**". The weeding tool **100** as illustrated in **FIG. 7** is a wheeled robot **600** configured to maneuver on the plantation surface "**G**". The wheeled robot **600** includes a body **602** that further includes a pair of axles to support four wheels **604.** The four wheels **604** are configured to maneuver the wheeled robot **600** on the plantation surface "**G**".

Further, the body **602** includes an electronic housing on the inside of the body **602** such that the electronic housing houses the control unit to control the working of the weeding tool **100** or the wheeled robot **600.** Further, the navigation device is communicably coupled with the control unit such that the navigation device is configured to navigate the weeding tool **100** or the wheeled robot **600** on the plantation surface "**G**" to detect weeds on the plantation surface "**G**".

The wheeled robot **600** is mechanically coupled to the weed removal device **400.** The weed removal device **400** is the clamp that includes the at least two arms **402**, **404** that are movable towards and away from each other to close and open the clamp respectively. The weed removal device **400** is mechanically coupled to the body **602** of the wheeled robot **600** via the slide and transmission frame **500** which is directly coupled to the body **602** of the wheeled robot **600.**

The slide and transmission frame **500** includes two elongate parts **502** slidably linked onto the body **602** such that the two elongate parts **502** allows reciprocating movement of the weed removal device **400** in the vertical direction perpendicular to the plantation surface "**G**". Further, the two elongate parts **502** at least partially house the transmission box **504** that further mechanically couples to the weed removal device **400.** The transmission box **504** houses the actuating device **310** and the secondary actuating device **320.**

The actuating device **310** is communicably coupled with the control unit. The actuating device **310** is an electric device, particularly the electric motor. The actuating device **310** is configured to actuate the movement in the weed removal device **400** towards and away from the plantation surface "**G**" when prompted or instructed by the control unit housed in the body **602.** The actuating device **310** is configured to actuate the movement in the weed removal device **400** towards and away from the plantation surface "**G**" by sliding the two elongate parts **502** relative to the body **602** in the direction towards and away from the plantation surface "**G**". Further, the secondary actuating device **320** is operatively coupled to the control unit. In other words, the control unit controls the secondary actuating device **320** to move the at least two arms **402, 404** of the weed removal device **400** towards and away from each other to close and open the clamp respectively.

During operation of the wheeled robot **600**, the wheeled robot **600** maneuvers on the plantation surface "**G**" using the communication between the control unit and the navigation device communicably coupled with each other. The wheeled robot **600** based on the feedback of the navigation device reaches the location on the plantation surface "**G**" where the weed is grown.

Further, the weed removal device **400** is operatively coupled with the wheeled robot **600** such that the weed removal device **400** is movable towards and away from the plantation surface "**G**" when actuated by the actuating device **310.** In other words, the control unit of the wheeled robot **600** is operatively coupled to the weed removal device **400** via the secondary actuating device **320** housed in the transmission box **504** such that the control unit operates to move the at least two arms **402, 404** away from each other, resulting in an angle between each other of **5**° to **180**° before instructing the actuating device **300** housed in the transmission box **504** to actuate the sliding movement of the two elongate parts **502** relative to the body **602** in the direction towards the plantation surface "**G**" and hence actuate the movement in the weed removal device **400** towards the plantation surface "**G**".

Further, the control unit actuates the movement in the weed removal device **400** towards the plantation surface "**G**" such that the at least two arms **402**, **404** of the weed removal device **400** touches the plantation surface "**G**" and surround the weed to be picked or grabbed. Further, the control unit housed in the body **602** of the wheeled robot **600** includes the sensing unit such that the sensing unit is configured to sense the touch of the weed removal device **400** or the at least two arms **402**, **404** of the weed removal device **400** with the plantation surface "**G**" on which the weed is grown by detecting the increase in electrical current drawn by the actuating device **310** when the weed removal device **400** is lowered towards the plantation surface "**G**". In other words, the touching of the plantation surface "**G**" by the at least two arms **402**, **404** of the weed removal device **400** and further surrounding of the weed to be picked or grabbed by the at least two arms **402**, **404** is sensed by the sensing unit of the control unit by detecting the increase in electrical current drawn by the actuating device **300** as the at least two arms **402**, **404** face resistance from the plantation surface "**G**" and do not move further down.

Further, the weeding tool **100** or the wheeled robot **600** commences picking up of weed from the plantation surface "**G**" after the sensing unit senses the touch of the weed removal device **400** with the plantation surface "**G**" on which the weed is grown. In other words, upon detection of the touch of the plantation surface "**G**" by the at least two arms **402**, **404** of the weed removal device **400**, the control unit of the wheeled robot **600** that is operatively coupled to the weed removal device **400** via the secondary actuating device **320** housed in the transmission box **504** operates to close the clamp (such that the at least two arms **402, 404** have the angle between each other of **0**°) and grab the weed to be picked before the control unit instructs the actuating device **310** to actuate the sliding of the two elongate parts **502** relative to the body **602** in the direction away from the plantation surface "**G**" and hence actuate the weed removal device **400** away from the plantation surface "**G**".

Further, the control unit instructs the actuating device **310** to actuate the sliding of the two elongate parts **502** relative to the body **602** in the direction away from the plantation surface "**G**" and hence actuate the weed removal device **400** away from the plantation surface "**G**" while still keeping the at least two arms **402**, **404** of the weed removal device **400** towards each other at **0**° angle to keep the weed in a grabbed and uprooted state.

Further, when the weed removal device **400** is away from the plantation surface "**G**", the control unit of the wheeled robot **600** that is operatively coupled to the weed removal device **400** via the secondary actuating device **320** housed in the transmission box **504** operates to move the at least two arms **402**, **404** away from each other, resulting in an angle between each other of **5**° to **180**° after the weed removal device **400** is actuated away from the plantation surface "**G**". When the at least two arms **402**, **404** have the angle between each other of **5**° to **180**°, the grabbed and uprooted weed is released for collection.

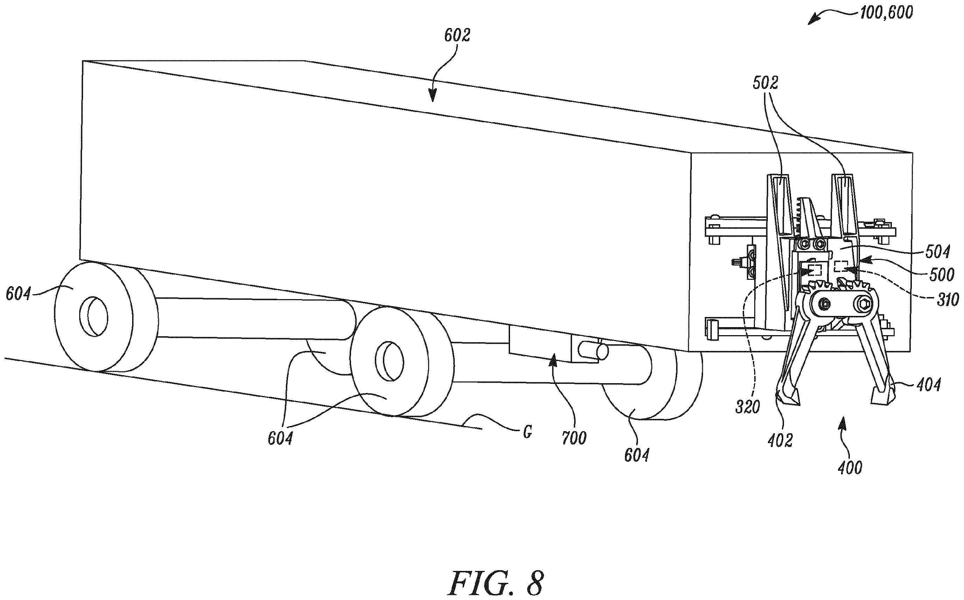

**FIG. 8** illustrates a perspective view of a weeding tool **100** according to yet another exemplary embodiment of the present invention. The weeding tool **100** is configured to maneuver or navigate on a plantation surface "**G**" on which the weed is grown. The weeding tool **100** is further configured to pick up weed from the plantation surface "**G**". The weeding tool **100** as illustrated in **FIG. 8** is the wheeled robot **600** configured to maneuver on the plantation surface "**G**". The wheeled robot **600** includes a body **602** that further includes the pair of axles to support four wheels **604.** The four wheels **604** are configured to maneuver the wheeled robot **600** on the plantation surface "**G**".

Further, the body **602** includes an electronic housing on the inside of the body **602** such that the electronic housing houses the control unit to control the working of the wheeled robot **600.** Further, the navigation device is communicably coupled with the control unit such that the navigation device is configured to navigate the weeding tool **100** or the wheeled robot **600** on the plantation surface "**G**" to detect weeds on the plantation surface "**G**".

The wheeled robot **600** is mechanically coupled to the weed removal device **400** that includes the at least two arms **402**, **404** that are movable towards and away from each other to close and open the clamp respectively. The weed removal device **400** is mechanically coupled to the body **602** of the wheeled robot **600** via the slide and transmission frame **500** which is directly coupled to the body **602** of the wheeled robot **600.**

The slide and transmission frame **500** includes two elongate parts **502** slidably linked onto the body **602** such that the two elongate parts **502** allows reciprocating movement of the weed removal device **400** in the vertical direction perpendicular to the plantation surface "**G**". Further, the two elongate parts **502** at least partially house the transmission box **504** that further mechanically couples to the weed removal device **400.** The transmission box **504** houses the actuating device **300** and the secondary actuating device **320.**

The actuating device **310** is communicably coupled with the control unit. The actuating device **310** is particularly the electric motor. The actuating device **310** is configured to actuate the movement in the weed removal device **400** towards and away from the plantation surface "**G**" when prompted or instructed by the control unit housed in the body **602.** The actuating device **310** is configured to actuate the movement in the weed removal device **400** towards and away from the plantation surface "**G**" by sliding the two elongate parts **502** relative to the body **602** in the direction towards and away from the plantation surface "**G**". Further, the secondary actuating device **320** is operatively coupled to the control unit. In other words, the control unit controls the secondary actuating device **320** to move the at least two arms **402, 404** of the weed removal device **400** towards and away from each other to close and open the clamp respectively.

The weeding tool **100** or the wheeled robot **600** as illustrated in **FIG. 8** additionally includes the video sensor and the image processing unit **700.** The video sensor and the image processing unit **700** are separate from the navigation device. The video sensor and an image processing unit **700** is coupled to the bottom side of the body **602** of the wheeled robot **600** such that the video sensor and an image processing unit **700** is in close proximity with the weed removal tool **400** to visualize and process any movement in the weed removal tool **400.** The weeding tool **100** or the wheeled robot **600** is communicably coupled with the video sensor and the image processing unit **700** via the control unit of the wheeled robot **600.** In other words, the video sensor and the image processing unit **700** are communicably coupled with the control unit.

When the weed removal tool **400** or the at least two arms **402**, **404** of the weed removal device **400** lowers towards the plantation surface "G" on which the weed is grown and touch the plantation surface "G", the sensing unit of the control unit senses the touch of the weed removal device **400** with the plantation surface "**G**" by analyzing the data from the video sensor and the image processing unit **700.**

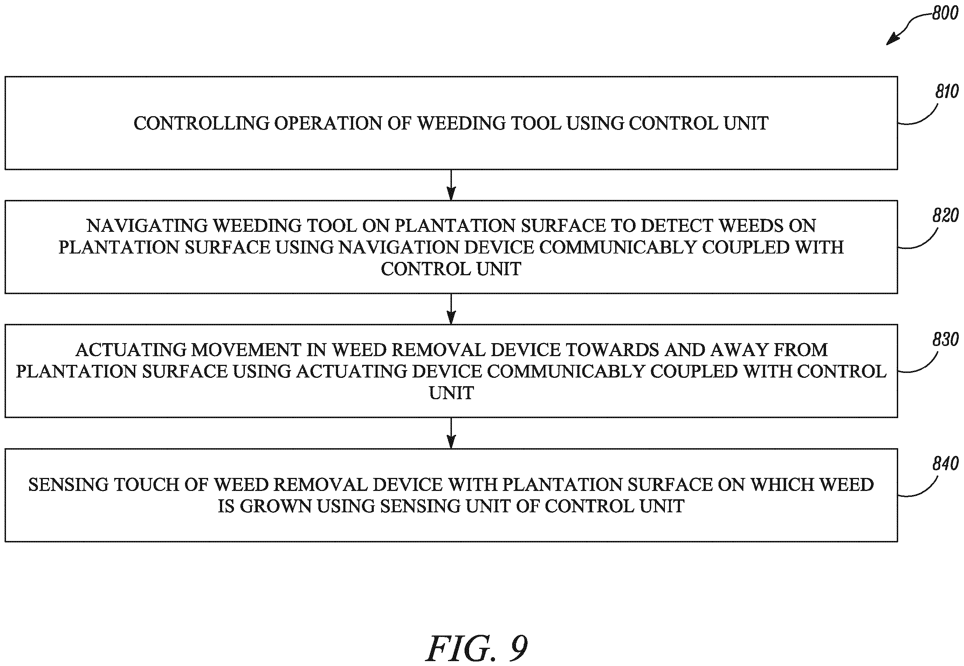

**FIG. 9** illustrates a flowchart of a method **800** of operating the weeding tool **100** for picking up weeds from the plantation surface "**G**". The method **800** includes step **810.** Step **810** includes controlling the operation of the weeding tool **100** using the control unit. Step **810** is followed by step **820.** Step **820** includes navigating the weeding tool **100** on the plantation surface "**G**" to detect weeds on the plantation surface "**G**" using the navigation device communicably coupled with the control unit. Further step **820** is followed by step **830** that includes actuating the movement in a weed removal device **400** towards and away from the plantation surface "**G**" using the actuating device **300**, **310** communicably coupled with the control unit. The weed removal device **400** is the clamp including at least two arms **402**, **404** movable towards and away from each other to close and open the clamp. Further step **830** is followed by step **840.** Step **840** includes sensing the touch of the weed removal device **400** with the plantation surface "**G**" on which the weed is grown by using the sensing unit of the control unit.

In one exemplary embodiment of the present invention, the sensing unit senses the touch of the weed removal device **400** with the plantation surface "**G**" by analyzing the data of the level sensor of the weeding tool **100** when the weed removal device **400** is lowered towards the plantation surface "**G**". The level sensor is communicably coupled with the control unit.

In another exemplary embodiment of the present invention, the sensing unit senses the touch of the weed removal device **400** with the plantation surface "**G**" by detecting the increase in electrical current drawn by the actuating device **310** when the weed removal device **400** is lowered towards the plantation surface "**G**".

In yet another exemplary embodiment of the present invention, the sensing unit senses the touch of the weed removal device **400** with the plantation surface "**G**" by analyzing the data from the video sensor and the image processing unit **700** provided with the weeding tool **100** such that the video sensor and the image processing unit **700** are communicably coupled with the control unit.

Further, the weeding tool **100** commences picking up of weed from the plantation surface "**G**" after the sensing unit senses the touch of the weed removal device **400** with the plantation surface "**G**" on which the weed is grown. In other words, sensing the touch of the weed removal device **400** with the plantation surface "**G**" on which the weed is grown is the prerequisite for commencing picking up of weed from the plantation surface "**G**" by the weeding tool **100** or the walking robot **200.**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Weeding Tool
- **200**: Walking Robot
- **202**: Frame
- **204**: Front set of Legs
- **206**: Rear Set of Legs
- **208**: Legs
- **208A**: Upper Leg Portion
- **208B**: Lower Leg Portion
- **210**: Legs
- **210A**: Upper Leg Portion
- **210B**: Lower Leg Portion
- **212**: Foot
- **300**: Actuating Device
- **310**: Actuating Device
- **320**: Secondary Actuating Device
- **400**: Weed Removal Device
- **402**: Arm
- **404**: Arm
- **500**: Slide and Transmission Frame
- **502**: Elongate Parts
- **504**: Transmission Box
- **600**: Wheeled Robot
- **602**: Body
- **604**: Wheels
- **700**: Video Sensor and Image Processing Unit
- **800**: Method
- **810**: Step
- **820**: Step
- **830**: Step
- **840**: Step
- **G**: Ground Surface

## Claims

1. A weeding tool **(100)** for picking up weed from a plantation surface **(G),** comprising:
a control unit to control a working of the weeding tool **(100),**
a navigation device communicably coupled with the control unit, wherein the navigation device is configured to navigate the weeding tool **(100)** on the plantation surface **(G)** to detect weeds on the plantation surface **(G),**
an actuating device **(300, 310)** communicably coupled with the control unit, wherein the actuating device **(300, 310)** is an electric device configured to actuate a movement in a weed removal device **(400)** towards and away from the plantation surface **(G),**
wherein the weed removal device **(400)** being a clamp comprising at least two arms **(402, 404)** movable towards and away from each other to close and open the clamp respectively,
**characterized in that:**
the control unit comprises a sensing unit configured to sense a touch of the weed removal device **(400)** with the plantation surface **(G)** on which the weed is grown,
wherein the weeding tool **(100)** commences picking up of weed from the plantation surface **(G)** after the sensing unit senses the touch of the weed removal device **(400)** with the plantation surface **(G)** on which the weed is grown.

2. The weeding tool **(100)** for picking up weeds from the plantation surface **(G)** according to claim **1,**
wherein the weeding tool **(100)** is a walking robot **(200)** with a front set of legs **(204)** and a rear set of legs **(206)** and configured to walk on the plantation surface **(G),**
wherein the front set of legs **(204)** and the rear set of legs **(206)** are configured to exhibit walking, lowering, and raising of the walking robot **(200),**
wherein the lowering and raising of the walking robot **(200)** translates to the lowering and raising of the weed removal device **(400)** towards and away from the plantation surface **(G),** and
wherein the actuation device **(300)** is configured to operate the front set of legs **(204)** and the rear set of legs **(206).**

3. The weeding tool **(100)** for picking up weeds from the plantation surface **(G)** according to claim **2,**
wherein the sensing unit senses the touch of the weed removal device **(400)** with the plantation surface **(G)** by analyzing a data of a level sensor of the walking robot **(200)** when the weed removal device **(400)** is lowered towards the plantation surface **(G),**
wherein the level sensor is communicably coupled with the control unit.

4. The weeding tool **(100)** for picking up weeds from the plantation surface **(G)** according to claim **3,**
wherein the level sensor senses a differential angle of inclination of the walking robot **(200).**

5. The weeding tool **(100)** for picking up weeds from the plantation surface **(G)** according to claim 1,
wherein the weeding tool **(100)** is a wheeled robot **(600)** configured to maneuver on the plantation surface **(G),**
wherein the weed removal device **(400)** is operatively coupled with the wheeled robot **(600),**
wherein the weed removal device **(400)** is movable towards and away from the plantation surface **(G)** when actuated by the actuating device **(310).**

6. The weeding tool **(100)** for picking up weeds from the plantation surface **(G)** according to any one of the preceding claims,
wherein the sensing unit senses the touch of the weed removal device **(400)** with the plantation surface **(G)** by detecting an increase in electrical current drawn by the actuating device **(310)** when the weed removal device **(400)** is lowered towards the plantation surface **(G),**
wherein the weed removal device **(400)** is movable towards and away from the plantation surface **(G)** when actuated by the actuating device **(310).**

7. The weeding tool **(100)** for picking up weeds from the plantation surface **(G)** according to claim 6,
wherein the actuation device **(310)** is an electric motor.

8. The weeding tool **(100)** for picking up weeds from the plantation surface **(G)** according to any one of the preceding claims,
wherein the weeding tool **(100)** is communicably coupled with a video sensor and an image processing unit **(700).**

9. The weeding tool **(100)** for picking up weeds from the plantation surface **(G)** according to claim **8,**
wherein the sensing unit senses the touch of the weed removal device **(400)** with the plantation surface **(G)** by analyzing a data from the video sensor and the image processing unit **(700),**
wherein the video sensor and the image processing unit **(700)** are communicably coupled with the control unit.

10. The weeding tool **(100)** for picking up weeds from the plantation surface **(G)** according to any one of the preceding claims,
wherein the control unit is operatively coupled to the weed removal device **(400)** such that the control unit operates to move at least two arms **(402, 404)** away from each other, resulting in an angle between each other of **5**° to **180**° before the actuating device **(300, 310)** actuates the movement in the weed removal device **(400)** towards the plantation surface **(G).**

11. The weeding tool **(100)** for picking up weeds from the plantation surface **(G)** according to claim 10,
wherein the control unit operates to move at least two arms **(402, 404)** of the weed removal device **(400)** towards each other to close the clamp before the actuating device **(300, 310)** actuates the movement in the weed removal device **(400)** away from the plantation surface **(G).**

12. A method **(800)** of operating a weeding tool **(100)** for picking up weeds from a plantation surface **(G),** comprising:
controlling the operation of the weeding tool **(100)** using a control unit,
navigating the weeding tool **(100)** on the plantation surface **(G)** to detect weeds on the plantation surface **(G)** using a navigation device communicably coupled with the control unit,
actuating a movement in a weed removal device **(400)** towards and away from the plantation surface **(G)** using an actuating device **(300, 310)** communicably coupled with the control unit, wherein the weed removal device **(400)** being a clamp comprising at least two arms **(402, 404)** movable towards and away from each other to close and open the clamp respectively,
**characterized in that:**
sensing a touch of the weed removal device **(400)** with the plantation surface **(G)** on which the weed is grown by using a sensing unit of the control unit,
wherein the weeding tool **(100)** commences picking up of weed from the plantation surface **(G)** after the sensing unit senses the touch of the weed removal device **(400)** with the plantation surface **(G)** on which the weed is grown.

13. The method **(800)** of operating the weeding tool **(100)** for picking up weeds from the plantation surface **(G)** according to claim **12,** wherein the sensing unit senses the touch of the weed removal device **(400)** with the plantation surface **(G)** by analyzing a data of a level sensor of the weeding tool **(100)** when the weed removal device **(400)** is lowered towards the plantation surface **(G),**
wherein the level sensor is communicably coupled with the control unit.

14. The method **(800)** of operating the weeding tool **(100)** for picking up weeds from the plantation surface **(G)** according to claim **12,** wherein the sensing unit senses the touch of the weed removal device **(400)** with the plantation surface **(G)** by detecting an increase in electrical current drawn by the actuating device **(310)** when the weed removal device **(400)** is lowered towards the plantation surface **(G).**

15. The method **(800)** of operating the weeding tool **(100)** for picking up weeds from the plantation surface **(G)** according to claim **12,** wherein the sensing unit senses the touch of the weed removal device **(400)** with the plantation surface **(G)** by analyzing a data from a video sensor and an image processing unit **(700),**
wherein the video sensor and the image processing unit **(700)** are communicably coupled with the control unit.
